# EUROPÄISCHE PATENTSCHRIFT

(11) **EP 3 958 415 B1**
(45) Veröffentlichungstag und Bekanntmachung des Hinweises auf die Patenterteilung: **07.02.2024**
(21) Anmeldenummer: 20192190.5
(22) Anmeldetag: 21.08.2020
(51) Int. Cl.: H02G 3/04, G02B 6/44, F16L 7/02, G02B 6/50, H02G 3/00, H02G 9/06

(54) **VERFAHREN UND VORRICHTUNG ZUR HERSTELLUNG EINES ROHRVERBUNDES AUS KABELROHREN**
METHOD AND DEVICE FOR PRODUCING A TUBULAR BUNDLE FROM CABLE TUBES
PROCÉDÉ ET DISPOSITIF DE FABRICATION D'UN FAISCEAU DE TUYAUX A PARTIR DE GAINES À CÂBLE

(43) Veröffentlichungstag der Anmeldung: 23.02.2022
(73) Patentinhaber: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Andrejewski - Honke Patent- und Rechtsanwälte Partnerschaft mbB

(56) Entgegenhaltungen:
- EP-A1- 2 375 518
- WO-A1-2020/174254
- US-A1- 2003 012 527
- US-A1- 2005 224 124

## Beschreibung

Die Erfindung betrifft ein Verfahren zur Herstellung eines Rohrverbundes aus Mikrokabelrohren zur Aufnahme und Führung von Telekommunikationsleitungen, wonach die einzelnen Mikrokabelrohre bereitgestellt und mit wenigstens einer schlauchförmigen Umhüllung zu einem Mehrfachrohrbündel zusammengefasst werden, und wonach die Umhüllung an ihrer den Mikrokabelrohren zugewandten Innenseite mit einer Profilierung ausgerüstet wird.

Mikrokabelrohre bezeichnen generell Kabelrohre mit verringertem Durchmesser, die im allgemeinen Werte für den Außendurchmesser von bis zu 40 mm annehmen. Solche Mikrokabelrohre werden unter anderem von der Firma Rehau hergestellt und unter der Kennzeichnung "Rauspeed Mikrokabelrohrsystem" sowie unter der Kennzeichnung "FiberSpeed" von der Anmelderin vermarktet. Die Erfindung ist jedoch ausdrücklich nicht auf die Herstellung eines Rohrverbundes aus Mikrokabelrohren beschränkt, sondern es geht ganz generell um solche Rohrverbunde.

Im Stand der Technik sind solche Rohrverbunde bzw. Mehrfachrohrbündel bereits bekannt, wozu auf die EP 3 173 834 A1 Bezug genommen sei. Bei der bekannten Lehre verfügen die einzelnen oder sämtliche Mikrokabelrohre über wenigstens einen Kennzeichenstreifen bzw. eine Farbkennzeichnung zur gegenseitigen Unterscheidung. Dadurch lassen sich die einzelnen Kabelrohre bzw. Mikrokabelrohre mit den darin geführten Telekommunikationsleitungen problemlos voneinander unterscheiden. Das ist für die Realisierung von insbesondere Glasfaser-Netzarchitekturen von besonderer Bedeutung. Tatsächlich dienen nämlich die Mikrokabelrohre in der Regel zur Aufnahme und Führung von Telekommunikationsleitungen, bei denen es sich meistens um Lichtwellenleiter, Lichtwellenleiterkabel, Telefonkabel etc. handelt.

Der Rohrverbund aus den Kabelrohren bzw. das eine oder die mehreren Mehrfachrohrbündel werden zu diesem Zweck in der Regel bis zu einem Kabelverzweiger oder auch bis in ein Gebäude oder vor ein Gebäude verlegt. Mithilfe der ein- bzw. aufgebrachten Farbkennzeichnungen lassen sich die einzelnen Mikrokabelrohre voneinander unterscheiden, so dass das betreffende Mikrokabelrohr mit der darin geführten Telekommunikationsleitung beispielsweise einem spezifischen Gebäude respektive einer bestimmten Wohnung in einem Gebäude oder auch einem Raum in einem Bürogebäude zugeordnet werden kann. Durch die Bündelung der Mikrokabelrohre und ihre Zusammenfassung mithilfe der Umhüllung wird die Verlegung und insbesondere Erdverlegung inklusive späterer Verzweigung vereinfacht.

Um das Mehrfachrohrbündel zur Verlegestelle zu transportieren, werden die Mehrfachrohrbündel in der Regel im Zuge der Herstellung auf Trommeln aufgewickelt. Hierbei kann es sich beispielhaft um Holztrommeln mit einer Wickellänge von über 1000 m handeln. An der Baustelle bzw. Verlegestelle wird nun das Mehrfachrohrbündel von der Holztrommel im Beispielfall abgewickelt.

An dieser Stelle können sich Spannungen im Mehrfachrohrbündel dergestalt ergeben, dass hier ein sogenannter "Korkenziehereffekt" beobachtet wird. Dieser Effekt lässt sich im Endeffekt darauf zurückführen, dass die einzelnen Kabelrohre und insbesondere Mikrokabelrohre in der Praxis und beispielsweise im Vakuum mit der schlauchförmigen Umhüllung ausgerüstet und hierin eingeschlossen werden. Als Folge hiervon liegt ein besonders festes Mehrfachrohrbündel vor. Sobald dieses Mehrfachrohrbündel auf der Holztrommel im Beispielfall aufgewickelt wird, ergeben sich durch die zwangsläufig zu beachtenden Wickelradien Spannungen im Innern, die sich beim Abwickeln durch eine Verschiebung der Kabelrohre im Innern der schlauchförmigen Umhüllung auflösen können.

Diese Verschiebung ist oftmals mit einem spiralförmigen oder wendelförmigen Ausweichen der einzelnen Kabelrohre im Innern des Mehrfachrohrbündels verbunden, so dass sich der zuvor bereits angesprochene "Korkenziehereffekt" erklärt. Dieser Korkenziehereffekt ist am Verarbeitungsort bzw. einer Baustelle insofern nachteilig und sollte möglichst vermieden werden, weil hierdurch das Auffinden einzelner Mikrokabelrohre und beispielsweise abzweigen in ein Gebäude oder einen Kabelverzweiger problematisch ist, nicht nur weil das fragliche Mikrokabelrohr zunächst "gesucht" werden muss, sondern auch und insbesondere mit durch den Korkenziehereffekt verbundenen Spannungen ausgerüstet ist.

Aus diesem Grund gibt es im Stand der Technik nach der NL 2 001 728 C2 bereits Ansätze dahingehend, einen Rohrverbund aus Mikrokabelrohren zur Aufnahme und Führung von beispielsweise Lichtwellenleitern, Telefonkabeln und vergleichbaren Kabeln mit einer Umhüllung auszurüsten sowie die einzelnen Mikrokabelrohre zusammenzufassen. Die einzelnen oder sämtliche Mikrokabelrohre sind darüber hinaus noch mit einem Kennzeichenstreifen in Gestalt der Farbe des Mikrokabelrohres ausgerüstet. Außerdem wird so vorgegangen, dass die Mikrokabelrohre bei der bekannten Lehre von vornherein im Vergleich zu einer longitudinalen Achse wendelförmig angeordnet werden. Dadurch soll im Endeffekt dem zuvor bereits beschriebenen Korkenziehereffekt entgegengewirkt werden. Allerdings ist eine solche wendelförmige Anordnung der Kabelrohre bzw. Mikrokabelrohre im Innern der Umhüllung bei der Herstellung eines solchen Mehrfachrohrbündels problematisch und aufwendig, weil typischerweise die Kabelrohre ebenso wie die Umhüllung meistens in Längsrichtung hergestellt und zu dem Mehrfachrohrbündel vereinigt werden.

Beim nächstkommenden Stand der Technik entsprechend der Gattung, wie er in der US 2003/0012527 A1 beschrieben wird, werden die einzelnen Mikrokabelrohre in die bereitgestellte Umhüllung eingezogen. Die Umhüllung kann auch mit einer innenwandseitigen Profilierung ausgerüstet werden. Allerdings werden die Mikrokabelrohre im Inneren der Umhüllung mit Abstand zur Innenwand aufgenommen.

Beim weiteren Stand der Technik nach der US 2005/0224124 A1 wird so vorgegangen, dass unterschiedliche Kabelrohre mithilfe einer Umhüllung zu einem Rohrbündel zusammengefasst werden. Zu diesem Zweck wird die Umhüllung mit Unterdruck schrumpfend aufgebracht. Dadurch können in fertigem Zustand nach wie vor Spannungen im Rohrbündel entstehen. Hier will die Erfindung insgesamt Abhilfe schaffen.

Der Erfindung liegt das technische Problem zugrunde, ein derartiges Verfahren und eine Vorrichtung zur Herstellung eines Rohrverbundes aus Kabelrohren so weiterzuentwickeln, dass bei nach wie vor und unverändert einfacher und kostengünstiger Herstellung zugleich ein etwaiger Korkenziehereffekt im Zusammenhang mit der Bevorratung bei der Auf- und Abwicklung von insbesondere Trommeln vermieden wird.

Zur Lösung dieser technischen Problemstellung ist ein gattungsgemäßes Verfahren zur Herstellung eines Rohrverbundes aus Mikrokabelrohren im Rahmen der

Erfindung dadurch gekennzeichnet, dass die Umhüllung mithilfe eines Ummantelungsextruders auf bzw. um das Bündel an den Mikrokabelrohren herum derart extrudiert wird, dass die schlauchförmige Umhüllung zur Herstellung des Mehrfachrohrbündels saugend an die Mikrokabelrohre angelegt wird.

Außerdem ist die Auslegung so getroffen, dass sich die Mikrokabelrohre einerseits und auch die schlauchförmige Umhüllung andererseits jeweils streng in Längsrichtung erstrecken und ausdrücklich keinen schrauben- oder wendeiförmigen Verlauf aufweisen, wie dies im Stand der Technik nach der NL 2 001 728 C2 propagiert wird. Dadurch wird insgesamt die Herstellung besonders einfach vorgenommen, weil sowohl die Mikrokabelrohre als auch die Umhüllung jeweils in ihrer Längsrichtung produziert und anschließend und wie beschrieben zu dem Mehrfachrohrbündel vereinigt werden.

Der Erfindung liegt das technische Problem zugrunde, ein derartiges Verfahren und eine Vorrichtung zur Herstellung eines Rohrverbundes aus Kabelrohren so weiterzuentwickeln, das bei nach wie vor und unverändert einfacher und kostengünstiger Herstellung zugleich ein etwaiger Korkenziehereffekt im Zusammenhang mit der Bevorratung bei der Auf- und Abwicklung von insbesondere Trommeln vermieden wird.

Zur Lösung dieser technischen Problemstellung ist ein gattungsgemäßes Verfahren zur Herstellung eines Rohrverbundes aus Kabelrohren mit wenigstens einer schlauchförmigen Umhüllung, welche an ihrer den Kabelrohren zugewandten Innenseite mit einer Profilierung ausgerüstet wird im Rahmen der Erfindung dadurch gekennzeichnet, dass sich die Profilierung aus jeweils Längsriefen vorzugsweise unterschiedlicher Riefenhöhe zusammensetzt, wobei die Längsriefen mit wenigstens zwei verschiedenen Riefenhöhen in die Umhüllung eingebracht werden, und wobei zwei Längsriefen großer Riefenhöhe zwei Längsriefen kleiner Riefenhöhe einschließen, so dass im Herstellungszustand des Mehrfachrohrbündels lediglich die Längsriefen großer Riefenhöhe am Außenumfang der betreffenden Kabelrohre innenseitig anliegen und bei einer Verbreiterung des Mehrfachrohrbündels, bspw. beim Aufwickeln auf eine Trommel, auch die Längstreifen kleiner Riefenhöhe mit dem Außenumfang des betreffenden und im Innern befindlichen Kabelrohres bzw. der mehreren Kabelrohre in Kontakt kommen.

Das saugende Anlegen der schlauchförmigen Umhüllung zur Herstellung des Mehrfachrohrbündels an die einzelnen Kabelrohre bzw. Mikrokabelrohre führt nun erfindungsgemäß in Verbindung mit der Profilierung der Umhüllung an ihrer den Kabelrohren zugewandten Innenseite dazu, dass das Mehrfachrohrbündel zwar eine dichte Packung zur Verfügung stellt, gleichwohl eine gewisse Relativbewegung zwischen den im Innern der schlauchförmigen Umhüllung zusammengefassten Kabelrohren und insbesondere Mikrokabelrohren zulässt.

Das lässt sich im Endeffekt darauf zurückführen, dass sich die Profilierung regelmäßig aus jeweils Längsriefen zusammensetzt, die darüber hinaus eine unterschiedliche Riefenhöhe aufweisen.

Die Längsriefen bilden dabei jeweils in Längsrichtung der Umhüllung verlaufende Erhebungen. Die Längsriefen und deren Ausprägung ist erneut der Tatsache geschuldet, dass die Umhüllung in Längsrichtung produziert und mit den zuvor in Längsrichtung produzierten Kabelrohren vereinigt wird. Durch die Produktion der schlauchförmigen Umhüllung in Längsrichtung lassen sich die Längsriefen problemlos auf der Innenseite der Umhüllung anbringen und vorteilhaft auch mit den unterschiedlichen Riefenhöhen ausrüsten.

Als Folge hiervon kommt es zwischen der Umhüllung und den einzelnen Kabelrohren bzw. Mikrokabelrohren im Innern des Mehrfachrohrbündels nicht zu einer vollflächigen Anlage. Vielmehr ist die Auslegung so getroffen, dass einzelne oder sämtliche der Längsriefen mit ihren Riefenhöhen gleichsam punktuell und teilweise am Außenumfang des betreffenden Kabelrohres anliegen. Dadurch ist die Reibung zwischen dem betreffenden Kabelrohr und der Umhüllung im Vergleich zur bisherigen und aus der Praxis bekannten Vorgehensweise deutlich reduziert, nämlich auf die jeweils im Querschnitt punktuellen Berührbereiche, die sich in Längsrichtung des Mehrfachrohrbündels linienförmig fortsetzen.

Beim Stand der Technik aus der Praxis kommt es demgegenüber zu einer mehr oder minder großflächigen Anlage der Umhüllung am Außenumfang des betreffenden Kabelrohres, welche ein Ausweichen des Kabelrohres verhindert. Demgegenüber eröffnet der punktförmige Kontakt des betreffenden Kabelrohres mit einzelnen oder mehreren der Längsriefen erfindungsgemäß die Möglichkeit, dass das betreffende Kabelrohr im Innern des Mehrfachrohrbündels in gewissen Grenzen (in Querrichtung) hin und her verschoben werden kann.

Das ist besonders beim Auf- und Abwickeln des Mehrfachrohrbündels auf beispielsweise eine Trommel von besonderer Bedeutung, weil hierdurch in der Regel der Querschnitt des Mehrfachrohrbündels verbreitert wird. Das ist erfindungsgemäß problemlos möglich, weil die Querschnittsverbreiterung durch eine Relativverschiebung der Kabelrohre bzw. Mikrokabelrohre gegeneinander im Innern des Mehrfachrohrbündels (in Querrichtung) zugelassen wird. Als Folge hiervon beobachtet man beim Abwickeln des erfindungsgemäßen Mehrfachrohrbündels von der Trommel keinen Korkenziehereffekt, was die Verarbeitung vor Ort und am Verlegeort deutlich vereinfacht, wie dies zuvor bereits erläutert wurde. Insbesondere werden an dieser Stelle etwaige Spannungen im einzelnen Kabelrohr bzw. in dem Verbund der Kabelrohre ausdrücklich nicht beobachtet bzw. können sich bei Vorhandensein auflösen. Hierin sind die wesentlichen Vorteile zu sehen.

Erfindungsgemäß sind die realisierten Längsriefen an der den Kabelrohren zugewandten Innenseite der Umhüllung mit wenigsten zwei verschiedenen Riefenhöhen in bzw. an die Umhüllung eingebracht. Dabei wird so vorgegangen, dass jeweils zwei Längsriefen großer Riefenhöhe zwei Längsriefen kleiner Riefenhöhe einschließen.

Durch diese Vorgehensweise ist gewährleistet, dass in der Regel im Herstellungszustand des Mehrfachrohrbündels lediglich die Längsriefen großer Riefenhöhe am Außenumfang der betreffenden Kabelrohre innenseitig anliegen. Kommt es jedoch zu einer Verbreiterung des Mehrfachrohrbündels beispielsweise beim Aufwickeln auf eine Trommel, so kommen auch die Längsriefen kleiner Riefenhöhe regelmäßig mit dem Außenumfang des betreffenden und im Innern befindlichen Kabelrohres bzw. der mehreren Kabelrohre in Kontakt. Gleichwohl liegt erfindungsgemäß und unverändert ein jeweils punktförmiger Kontakt zwischen den Längsriefen an der Innenseite der Umhüllung einerseits und dem zugehörigen Außenumfang der Kabelrohre im Innern der Umhüllung andererseits vor.

In diesem Zusammenhang hat es sich weiter bewährt, wenn zwischen den Längsriefen kleiner Riefenhöhe ein Bogenabschnitt vorgesehen ist. Durch diesen Bogenabschnitt können die Längsriefen kleiner Riefenhöhe bei der zuvor bereits beschriebenen und beispielsweise beim Aufwickeln auf eine Trommel beobachteten Verbreiterung des Mehrfachrohrbündels ihre Ausrichtung zueinander verändern, beispielsweise von einer parallelen in eine winklige Anordnung zueinander übergehen. Demgegenüber weisen die beiden Längsriefen großer Riefenhöhe beidseitig überwiegend gerade abfallende Flanken unter Bildung einer im Wesentlichen Dreieckkante auf. Diese Auslegung ist der Tatsache geschuldet, dass die beiden Längsriefen großer Riefenhöhe durchgängig am Außenumfang des betreffenden Kabelrohres punktförmig anliegen, wobei diese punktförmige Anlage durch die gebildete Dreieckkante im Endeffekt zur Verfügung gestellt wird.

Die Kombination aus den Riefen unterschiedlicher Riefenhöhen definiert im Allgemeinen ein Riefenmuster. Dieses Riefenmuster wiederholt sich üblicherweise periodisch über den Innenumfang der Umhüllung, so dass die Herstellung des Riefenmusters besonders einfach vonstattengeht und über den Innenumfang der Umhüllung praktisch nur multipliziert werden muss.

In diesem Zusammenhang ist die Auslegung darüber hinaus meistens so getroffen, dass das Riefenmuster eine Musterlänge aufweist, die größtenteils an einen Radius der jeweiligen Kabelrohre angepasst ist. Die Musterlänge des Riefenmusters kann dabei im Querschnitt des Mehrfachrohrbündels gemessen und bestimmt werden. Durch die Anpassung der fraglichen Musterlänge des Riefenmusters an den Radius des jeweiligen Kabelrohres wird erfindungsgemäß erreicht und sichergestellt, dass regelmäßig ein Riefenmuster der betreffenden Musterlänge (oder auch weniger) am Außenumfang des Kabelrohres anliegt, wie nachfolgend noch näher in der Figurenbeschreibung erläutert wird. Dadurch kann zwischen dem Herstellungszustand des Mehrfachrohrbündels und einer etwaigen Verbreiterung beim Aufwickeln auf eine Trommel problemlos hin- und hergewechselt werden, so dass hierdurch etwaige Spannungen im Innern des Mehrfachrohrbündels von vornherein und prinzipbedingt vermieden werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine erfindungsgemäße Vorrichtung zur Herstellung eines Rohrverbundes aus Kabelrohren, welche vorzugsweise zur Durchführung des zuvor bereits beschriebenen Verfahrens geeignet ist und
- Fig. 2: einen Querschnitt durch den hergestellten Mehrfachrohrbündel ausgangsseitig der Vorrichtung und vor dem Aufwickeln.

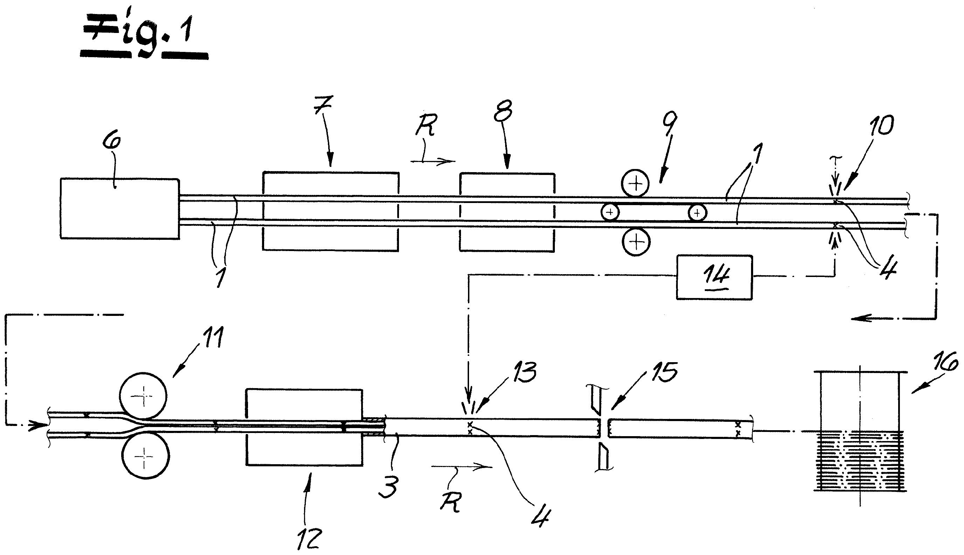

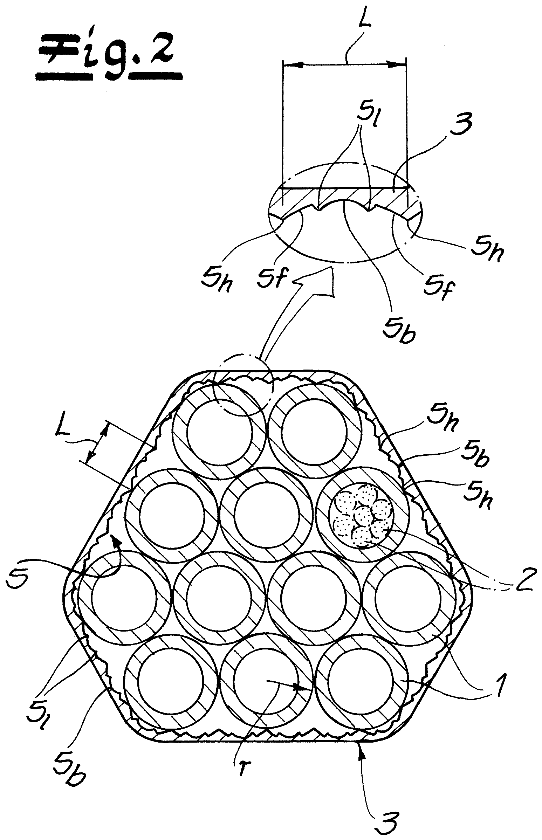

In der Fig. 1 ist eine Vorrichtung zur Herstellung eines Rohrverbundes aus einzelnen Kabelrohren dargestellt. Bei den Kabelrohren handelt es sich im Ausführungsbeispiel um Mikrokabelrohre 1, die zur Aufnahme und Führung von Telekommunikationskabeln 2 eingerichtet sind, die lediglich in der Fig. 2 wiedergegeben werden. Bei den Telekommunikationsleitungen 2 handelt es sich im Beispielfall um Glasfaserleitungen. Die einzelnen Kabelrohre bzw. Mikrokabelrohre 1 werden zu diesem Zweck bereitgestellt und mit einer schlauchförmigen Umhüllung 3 zu einem Mehrfachrohrbündel 1, 3 zusammengefasst, wie man anhand des hergestellten Endzustandes in der Fig. 2 erkennen und nachvollziehen kann.

Das jeweilige Kabelrohr bzw. Mikrokabelrohr 1 kann zur gegenseitigen Unterscheidung über eine Markierung 4 verfügen, welche im Ausführungsbeispiel als längenbezogene Markierung 4 in vorgegebenen Abständen auf das betreffende Kabelrohr bzw. Mikrokabelrohr 1 aufgebracht wird. Auch die Umhüllung 3 wird nach dem Ausführungsbeispiel mit längenbezogenen Markierungen 4 ausgerüstet. Dabei ist die Auslegung insgesamt so getroffen, dass die Markierungen 4 auf den Mikrokabelrohren 1 ebenso wie die Markierungen 4 auf der Umhüllung 3 fortlaufend aufgebracht werden.

Die Herstellung des realisierten Mehrfachrohrbündels 1, 3 wird nachfolgend im Detail beschrieben. Man erkennt anhand der Fig. 2, dass erfindungsgemäß und wesentlich die Umhüllung 3 an ihrer den Kabelrohren 1 zugewandten Innenseite mit einer erhabenen Profilierung 5 ausgerüstet wird. Die Profilierung 5 kann dabei im Querschnitt über die gesamte Innenseite der Umhüllung verteilt angeordnet werden. Außerdem erstreckt sich die Profilierung 5 in Längsrichtung der Umhüllung 3. Grundsätzlich ist es aber auch möglich, dass die Profilierung 5 nur jeweils sektionsweise an der Innenseite der Umhüllung 3 im Querschnitt vorgesehen wird, was im Ausführungsbeispiel jedoch nicht dargestellt ist.

Die Profilierung 5 setzt sich dabei ausweislich der Fig. 2 aus jeweils Längsriefen 5ₕ und 5ₗ zusammen. Tatsächlich sind Längsriefen 5ₕ großer Riefenhöhe (h = high) ebenso wie Längsriefen 5ₗ kleiner Riefenhöhe (l = low) realisiert. Der Detailaufbau wird nachfolgend noch mit Blick auf die Fig. 2 näher erläutert. Tatsächlich beträgt die Riefenhöhe beispielsweise 1 mm für die Längsriefen 5ₕ und 0,5 mm für die Längsriefen 5ₗ.

Zurückkommend auf die Fig. 1 erkennt man zunächst einmal, dass die dort dargestellte Produktionslinie bzw. Vorrichtung zur Herstellung des Rohrverbundes bzw. des Mehrfachrohrbündels 1, 3 ausgangsseitig zunächst einen Extruder 6 aufweist. Mithilfe des Extruders 6 werden die Mikrokabelrohre 1 ausgangsseitig erzeugt und in einer Produktionsrichtung R bewegt. Die Produktion der Mikrokabelrohre 1 erfolgt dabei ebenso wie der Umhüllung 3 jeweils in ihrer Längsrichtung und die Mikrokabelrohre 1 werden in dieser Längsrichtung bzw. in der Produktionsrichtung R zusammengefasst sowie ebenfalls in der Produktionsrichtung R bzw. Längsrichtung von der schlauchförmigen Umhüllung 3 umschlossen, wie nachfolgend noch näher erläutert wird.

An den Extruder 6 schließt sich eine Kalibrierungseinheit 7 an, innerhalb derer mithilfe eines dort herzustellenden Vakuums die einzelnen Mikrokabelrohre 1 hinsichtlich ihres Durchmessers auf den ausgangsseitig benötigten und vorgegebenen Sollwert gebracht werden. Eine anschließende Kühleinheit 8 sorgt dafür, dass die hierdurch im Nachgang zur Kalibrierungseinheit 7 hindurchgeführten Mikrokabelrohre 1 abgekühlt werden.

An die Kühleinheit 8 schließt sich ein Abzug bzw. eine Abzugseinheit 9 an, mit deren Hilfe die einzelnen Mikrokabelrohre 1 jeweils in unterschiedlichen Ebenen zwischen einem umlaufenden Förderband und einer Gegenwalze abgezogen und gefördert werden. An die Abzugseinheit 9 schließt sich eine erste Markierungseinheit 10 an, mit deren Hilfe die einzelnen Mikrokabelrohre 1 mit der gewünschten längenbezogenen Markierung 4 ausgerüstet werden. An die erste Markierungseinheit 10 schließt sich eine Konfektionierungseinheit 11 an, mit deren Hilfe die einzelnen Mikrokabelrohre 1, die bisher in der Regel in unterschiedlichen Ebenen nebeneinander geführt werden, eine Zusammenfassung über einen beispielsweise an dieser Stelle vorgesehenen Ring für die anschließende Ummantelung erfahren.

Dementsprechend schließt sich an die Konfektionierungseinheit 11 eine Ummantelungseinrichtung bzw. Umhüllungseinheit 12 an, die dafür sorgt, dass die zuvor konfektionierten Mikrokabelrohre 1 mit der schlauchförmigen Umhüllung 3 ausgerüstet werden. Zu diesem Zweck wird die Umhüllung 3 mithilfe eines an dieser Stelle vorgesehenen Ummantelungsextruders auf bzw. um das Bündel an den Mikrokabelrohren 1 herum extrudiert. Das geschieht nach dem Ausführungsbeispiel und erfindungsgemäß derart, dass die schlauchförmige Umhüllung 3 zur Herstellung des Mehrfachrohrbündels 1, 3 saugend an die einzelnen Kabelrohre bzw. Mikrokabelrohre 1 angelegt wird, wie dies einleitend bereits beschrieben wurde.

An die Ummantelungseinrichtung bzw. Umhüllungseinheit 12 schließt sich eine weitere zweite Markierungseinheit 13 an, die wie die erste Markierungseinheit 10 als Tintenstrahldrucker ausgebildet ist oder sein kann. Beide Markierungseinheiten 10,13 werden von einer gemeinsamen Steuereinheit 14 beaufschlagt. Jedenfalls werden die Mikrokabelrohre 1 ebenso wie die Umhüllung 3 jeweils und fortlaufend mit einer längenbezogenen Markierung ausgerüstet.

Anschließend an die zweite Markierungseinheit 3 ist dann noch eine Schere bzw. Abkantungseinheit 15 realisiert, an die sich schlussendlich und endseitig eine Aufnahmeeinheit 16 anschließt, bei welcher es sich im Rahmen des Ausführungsbeispiels um eine Wickeleinheit und konkret eine Trommel handelt. Auf dieser Trommel wird das jeweilige Mehrfachrohrbündel 1, 3 ausgehend von dem Herstellungszustand entsprechend der Darstellung in der Fig. 2 aufgewickelt. Hierbei kommt es typischerweise zu einer Verbreiterung des Querschnittes des Mehrfachrohrbündels 1, 3. Dabei bewegen sich die Kabelrohre bzw. Mikrokabelrohre 1 (meistens in Querrichtung) gegeneinander. Eine solche Relativbewegung der Mikrokabelrohre 1 gegeneinander und auch gegenüber der Umhüllung 3 wird erfindungsgemäß ausdrücklich zugelassen, weil die Umhüllung 3 an ihrer den Kabelrohren bzw. Mikrokabelrohren 1 zugewandten Innenseite mit der zuvor bereits angesprochenen Profilierung 5 ausgerüstet ist.

Betrachtet man nun die Fig. 2 und die dort jeweils dargestellten Längsriefen 5ₕ großer Riefenhöhe ebenso wie die Längsriefen 5ₗ kleiner Riefenhöhe, so wird deutlich, dass im Ausführungsbeispiel die Längsriefen 5 bzw. 5ₕ, 5ₗ mit wenigstens zwei verschiedenen Riefenhöhen ausgerüstet und in die Umhüllung 3 eingebracht worden sind. Außerdem erkennt man anhand des vergrößerten Ausschnittes in der Fig. 2, dass zwischen den Längsriefen 5ₗ kleiner Riefenhöhe ein Bogenabschnitt 5_{b} realisiert ist und darüber hinaus, dass zwei Längsriefen 5ₕ gro-βer Riefenhöhe zwei Längsriefen 5ₗ kleiner Riefenhöhe einschließen. Beidseitig der Längsriefen 5ₕ großer Riefenhöhe beobachtet man demgegenüber überwiegend gerade abfallende Flanken 5_{f}. Auf diese Weise bilden die beidseitig abfallenden Flanken 5_{f} zusammen mit der zugehörigen Längsriefe 5ₕ großer Riefenhöhe insgesamt eine Dreieckkante. Als Folge hiervon formt die Abfolge bzw. Kombination der einzelnen Riefen 5ₕ, 5ₗ unterschiedlicher Riefenhöhe insgesamt ein Riefenmuster 5ₕ, 5ₗ, 5_{b} und 5_{f}, welches über eine bestimmte und in der Fig. 2 eingezeichnete Musterlänge L verfügt. Außerdem kann man anhand der Fig. 2 erkennen, dass dieses Riefenmuster 5ₕ, 5ₗ, 5_{b} und 5_{f} sich periodisch über den Innenumfang der Umhüllung 3 wiederholt. Tatsächlich ist nach dem Ausführungsbeispiel in der Fig. 2 eine fünfzehnfache Wiederholung dieses Riefenmusters 5ₕ, 5ₗ, 5_{b} und 5_{f} vorgesehen und realisiert.

Die zuvor bereits angesprochene Musterlänge L des Riefenmusters 5ₕ, 5_{l,} 5_{b}, 5_{f} ist dabei nach dem Ausführungsbeispiel so gewählt und ausgelegt, dass sie größtenteils an einen Radius r des jeweiligen Kabelrohres bzw. Mikrokabelrohres 1 angepasst ist. Bei dem Radius r handelt es sich um den Außendurchmesser des fraglichen Mikrokabelrohres 1. Durch diese Bemessungsregel wird sichergestellt, dass am Außenumfang des mit der Innenseite der Umhüllung 3 jeweils in Kontakt kommenden Mikrokabelrohres 1 im Regelfall ein Riefenmuster 5h, 5l, 5b, 5f ganz oder teilweise zur Anlage kommen.

Man erkennt anhand der Fig. 2, dass im dort dargestellten Herstellungszustand des Mehrfachrohrbündels 1, 3 ausgangsseitig der Produktionslinie bzw. Vorrichtung nach der Fig. 1 und vor dem Aufwickeln auf die Trommel 16 jeweils wenigstens eine Längsriefe 5ₕ großer Riefenhöhe am Außenumfang des der Umhüllung 3 jeweils zugewandten Mikrokabelrohres 1 zur Anlage kommt. Meistens sind sogar zwei Längsriefen 5ₕ großer Riefenhöhe in Anlage am Außenumfang des betreffenden Mikrokabelrohres realisiert. Durch diesen punktförmigen Kontakt kann sich das betreffende Mikrokabelrohr 1 gegenüber den übrigen Mikrokabelrohren 1 - typischerweise in Querrichtung - verschieben und lässt sich auch die Querschnittsform des in der Fig. 2 dargestellten Mehrfachrohrbündels 1, 3 verändern, beispielsweise verbreitern, wenn das Mehrfachrohrbündel 1, 3 auf die Trommel 16 aufgewickelt wird. Tatsächlich lässt der punktförmige Kontakt zwischen der wenigstens einen Längsriefe 5ₕ großer Riefenhöhe und dem Außenumfang des der Umhüllung 3 zugewandten Mikrokabelrohres 1 eine solche Relativbewegung zu.

Bei der Verbreiterung des Querschnittes des Mehrfachrohrbündels 1, 3 nach der Fig. 2 beim Aufwickeln auf die Trommel 16 kann es nun dazu kommen, dass zusätzlich zu den Längsriefen 5h großer Riefenhöhe Längsriefen 5l kleiner Riefenhöhe ergänzend zur Anlage am Außenumfang der der Umhüllung 3 zugewandten Mikrokabelrohre 1 zur Anlage kommen. Gleichwohl ist nach wie vor ein letztlich punktförmiger Kontakt im Querschnitt zwischen der Umhüllung 3 bzw. ihrer Profilierung 5 und den im Innern aufgenommenen Mikrokabelrohren 1 im Ausführungsbeispiel gewährleistet. Dieser punktförmige Kontakt stellt sicher, dass im Innern des Mehrfachrohrbündels 1, 3 keine Spannungen aufgebaut werden und sich insbesondere nicht der zuvor bereits und einleitend beschriebene "Korkenziehereffekt" einstellt. Dadurch kann die Umhüllung 3 am Verlegeort problemlos geöffnet werden und lassen sich die einzelnen Mikrokabelrohre 1 unschwer aus dem Mehrfachrohrbündel 1, 3 abzweigen und verarbeiten.

## Patentansprüche

1. Verfahren zur Herstellung eines Rohrverbundes aus Mikrokabelrohren (1) zur Aufnahme und Führung von Telekommunikationsleitungen (2), wonach
die einzelnen Mikrokabelrohre (1) bereitgestellt und mit wenigstens einer schlauchförmigen Umhüllung (3) zu einem Mehrfachrohrbündel (1, 3) zusammengefasst werden, wobei die Umhüllung mit Hilfe eines Ummantelungsextruders auf bzw. um das Bündel an den Mikrokabelrohren herum derart extrudiert wird, dass die schlauchförmige Umhüllung zur Herstellung des Mehrfachrohrbündels saugend an die Mikrokabelrohre angelegt wird, **dadurch gekennzeichnet, dass**
die Umhüllung (3) an ihrer den Mikrokabelrohren (1) zugewandten Innenseite mit einer Profilierung (5) ausgerüstet wird,
wobei sich die Profilierung (5) aus jeweils Längsriefen (5ₕ, 5ₗ) zusammensetzt, wobei die Längsriefen (5ₕ, 5ₗ) mit wenigstens zwei verschiedenen Riefenhöhen in die Umhüllung (3) eingebracht werden, wobei
zwei Längsriefen (5ₕ) großer Riefenhöhe zwei Längsriefen (5ₗ) kleiner Riefenhöhe einschließen, so dass
im Herstellungszustand des Mehrfachrohrbündels (1, 3) lediglich die Längsriefen (5ₕ) großer Riefenhöhe am Außenumfang der betreffenden Kabelrohre (1) innenseitig anliegen und bei einer Verbreiterung des Mehrfachrohrbündels (1, 3), bspw. beim Aufwickeln auf eine Trommel, auch die Längstreifen (5ₗ) kleiner Riefenhöhe mit dem Außenumfang des betreffenden und im Innern befindlichen Kabelrohres (1) bzw. der mehreren Kabelrohre (1) in Kontakt kommen.

2. Verfahren nach Anspruch 1, **dadurch gekennzeichnet, dass** zwischen den Längsriefen (5ₗ) kleiner Riefenhöhe ein Bogenabschnitt (5_{b}) vorgesehen wird.

3. Verfahren nach einem der Ansprüche 1 oder 2, **dadurch gekennzeichnet, dass** die beiden Längsriefen (5ₕ) großer Riefenhöhe beidseitig überwiegend gerade abfallende Flanken (5_{f}) unter Bildung einer im Wesentlichen Dreieckkante aufweisen.

4. Verfahren nach einem der Ansprüche 1 bis 3, **dadurch gekennzeichnet, dass** die Kombination aus Riefen (5ₕ, 5ₗ) unterschiedlicher Riefenhöhe ein Riefenmuster (5ₕ, 5ₗ, 5_{b}, 5_{f}) definieren, welches sich periodisch über den Innenumfang der Umhüllung (3) wiederholt.

5. Verfahren nach Anspruch 4, **dadurch gekennzeichnet, dass** das Riefenmuster (5ₕ, 5ₗ, 5_{b}, 5_{f}) eine Musterlänge (L) aufweist, die an einen Radius (r) der jeweiligen Kabelrohre angepasst ist.

## Claims

1. A method for producing a tube composite from microcable tubes (1) for accommodating and guiding telecommunications lines (2), according to which the individual microcable tubes (1) are provided and combined with at least one tubular sheath (3) to form a multi-tube bundle (1, 3),
wherein the sheath is extruded with the aid of a sheathing extruder onto or around the bundle of the microcable tubes such that the tubular sheath is applied to the microcable tubes in a suctioning manner to produce the multi-tube bundle,
**characterised in that**
the sheath (3) is provided with a profile (5) on its inner face facing the microcable tubes (1),
wherein the profile (5) is composed of longitudinal corrugations (5ₕ, 5ₗ), wherein the longitudinal corrugations (5ₕ, 5ₗ) are made in the sheath (3) with at least two different corrugation heights, wherein two longitudinal corrugations (5ₕ) of large corrugation height enclose two longitudinal corrugations (5ₗ) of small corrugation height, so that when the multi-tube bundle (1, 3) is in the produced state only the longitudinal corrugations (5ₕ) of large corrugation height bear internally against the outer circumference of the relevant cable tube (1), and when the multi-tube bundle (1, 3) is widened, for example when being wound onto a drum, the longitudinal corrugations (5ₗ) of smaller corrugation height also come into contact with the outer circumference of the relevant cable tube (1) situated in the interior or the multiple cable tubes (1) .

2. The method according to Claim 1, **characterised in that** an arcuate section (5_{b}) is provided between the longitudinal corrugations (5ₗ) of small corrugation height.

3. The method according to one of Claims 1 or 2, **characterised in that** the two longitudinal corrugations (5ₕ) of large corrugation height have flanks (5_{f}) that descend largely in a straight line on both sides, forming a substantially triangular edge.

4. The method according to one of Claims 1 to 3, **characterised in that** the combination of corrugations (5ₕ, 5ₗ) of different corrugation heights define a corrugation pattern (5ₕ, 5ₗ, 5_{b}, 5_{f}) that repeats periodically around the inner circumference of the sheath (3).

5. The method according to Claim 4, **characterised in that** the corrugation pattern (5ₕ, 5ₗ, 5_{b}, 5_{f}) has a pattern length (L) that is adapted to a radius (r) of the respective cable tubes.

## Revendications

1. Procédé de fabrication d'un assemblage de tubes composé de tubes pour micro-câbles (1) destinés à loger et faire passer des lignes de télécommunication (2), les tubes pour micro-câbles individuels (1) étant préparés et réunis avec au moins une gaine (3) en forme de flexible en un faisceau multitubulaire (1, 3),
sachant que la gaine est extrudée à l'aide d'une extrudeuse d'enrobage sur ou autour du faisceau sur les tubes pour micro-câbles de telle manière que la gaine en forme de flexible est appliquée par aspiration sur les tubes pour micro-câbles pour fabriquer le faisceau multitubulaire,
**caractérisé en ce que**
la gaine (3) est dotée d'un profilage (5) sur son côté intérieur tourné vers les tubes pour micro-câbles (1),
sachant que le profilage (5) est respectivement composé de stries longitudinales (5ₕ, 5ₗ), sachant que les stries longitudinales (5ₕ, 5ₗ) sont pratiquées dans la gaine (3) avec au moins deux hauteurs de strie différentes,
sachant que deux stries longitudinales (5ₕ) de hauteur de strie plus grande comprennent deux stries longitudinales (5ₗ) de hauteur de strie plus petite de telle manière
qu'à l'état de la fabrication du faisceau multitubulaire (1, 3) seules les stries longitudinales (5ₕ) de hauteur de strie plus grande viennent adhérer à l'intérieur sur la périphérie extérieure des tubes de câble (1) concernés et également les stries longitudinales (5ₗ) de hauteur de strie plus petite viennent en contact avec la périphérie extérieure du tube de câble (1) concerné et se trouvant à l'intérieur ou avec les nombreux tubes de câble (1) lors d'un élargissement du faisceau multitubulaire (1, 3) ou lors de l'enroulement sur un touret.

2. Procédé selon la revendication 1, **caractérisé en ce qu'**une section en arc (5_{b}) est prévue entre les stries longitudinales (5ₗ) de hauteur de strie plus petite.

3. Procédé selon l'une quelconque des revendications 1 ou 2, **caractérisé en ce que** les deux stries longitudinales (5ₕ) de hauteur de strie différente comportent des flancs (5_{f}) tombants surtout droits des deux côtés en formant pour l'essentiel un bord triangulaire.

4. Procédé selon l'une quelconque des revendications 1 à 3, **caractérisé en ce que** la combinaison de stries (5ₕ, 5ₗ) de hauteur de strie différente définit un modèle de stries (5ₕ, 5ₗ, 5_{b}, 5_{f}), lequel se répète périodiquement sur la périphérie intérieure de la gaine (3).

5. Procédé selon la revendication 4, **caractérisé en ce que** le modèle de stries (5ₕ, 5ₗ, 5_{b}, 5_{f}) comporte une longueur de modèle (L), qui est adaptée à un rayon (r) des tubes de câble respectifs.
